# FASCICULE DE BREVET EUROPEEN

(11) **EP 3 008 033 B1**
(45) Date de publication et mention de la délivrance du brevet: **01.03.2017**
(21) Numéro de dépôt: 14734879.1
(22) Date de dépôt: 11.06.2014
(51) Int. Cl.: C04B 41/85, C04B 41/89, F01D 5/28

(54) **BARRIÈRE ENVIRONNEMENTALE POUR SUBSTRAT RÉFRACTAIRE CONTENANT DU SILICIUM**
UMGEBUNGSABGRENZUNG FÜR EIN FEUERFESTES SUBSTRAT MIT SILICIUM
ENVIRONMENTAL BARRIER FOR A REFRACTORY SUBSTRATE CONTAINING SILICON

(30) Priorité: 13.06.2013 FR 1355485
(43) Date de publication de la demande: 20.04.2016
(73) Titulaire: Safran Ceramics, 33185 Le Haillan (FR); Université de Bordeaux, 33000 Bordeaux (FR)
(72) Inventeur: LOUCHET, Caroline, 33460 Arsac (FR); COURCOT, Emilie, 33320 Le Taillan Médoc (FR); REBILLAT, Francis, 33700 Mérignac (FR); DELEHOUZE, Arnaud, 76430 Sainneville sur Seine (FR)
(74) Mandataire: Laïk, Eric
(86) Numéro de dépôt international: PCT/FR2014/051405
(87) Numéro de publication internationale: WO 2014/199075

(56) Documents cités:
- WO-A1-2010/072978

## Description

### Arrière-plan de l'invention

L'invention concerne la protection d'une pièce, comprenant un substrat dont au moins une partie adjacente à une surface est en un matériau réfractaire contenant du silicium, lors d'une utilisation à haute température en milieu oxydant, par formation d'une barrière environnementale sur la surface du substrat.

L'invention vise notamment la protection de pièces en matériau composite réfractaire tel qu'un matériau composite à matrice céramique (CMC) contenant du silicium, notamment un CMC à renfort fibreux en fibres de céramique, par exemple en fibres de carbure de silicium (SiC) ou à base de SiC, et matrice au moins partiellement en SiC.

Un domaine particulier d'application de l'invention est la protection de pièces en CMC formant des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Dans le document WO 2010/072978 est décrite la formation d'une barrière environnementale ayant au moins une couche auto-cicatrisante à base d'un système d'oxydes formé d'au moins un oxyde de terre rare, de silice et d'alumine. La composition de la couche auto-cicatrisante est choisie pour conserver une phase solide majoritaire jusqu'à au moins 1400°C environ tout en présentant au moins une phase liquide à une température égale ou supérieure à 1400°C environ, cette phase liquide étant en quantité suffisante pour assurer une fonction d'auto-cicatrisation à une telle température.

Il existe toutefois un besoin de protection de pièces en CMC qui sont exposées en service à des températures se situant dans une plage de températures inférieures à 1400°C. Cela est notamment le cas lorsque le renfort fibreux du matériau CMC est réalisé avec des fibres SiC ou à base SiC dont les propriétés sont nettement dégradées à 1400°C, mais dont le coût est significativement inférieur à celui de fibres SiC capables de supporter sans dommage une température de 1400°C ou plus.

### Objet et résumé de l'invention

Selon un premier aspect, l'invention a pour objet une pièce comprenant un substrat, dont au moins une partie adjacente à une surface du substrat est en un matériau réfractaire contenant du silicium, et une barrière environnementale formée sur la surface du substrat et ayant au moins une couche auto-cicatrisante contenant un silicate de terre rare,
pièce dans laquelle la couche auto-cicatrisante est formée:
- pour au moins 90% molaire, d'un système constitué de 30% molaire à au plus 80% molaire d'au moins un silicate de terre rare RE₂Si₂O₇, RE étant une terre rare, et d'au moins 20% molaire à 70% molaire d'oxyde de manganèse MnO, et
- pour au plus 10% molaire d'un ou plusieurs oxydes à l'exception de MnO, ayant un point eutectique avec SiO₂ inférieur ou égal à 1595°C,
- la couche auto-cicatrisante présentant une phase liquide ayant une fonction d'auto-cicatrisation au moins dans la plage de températures allant de 1200°C à 1400°C, tout en conservant une phase solide majoritaire.

Par "phase liquide ayant une fonction d'auto-cicatrisation", on entend ici la présence d'une phase liquide en quantité suffisante pour colmater efficacement des fissures susceptibles d'apparaître dans la barrière environnementale, c'est-à-dire représentant au moins 5% molaire dans la composition de la couche auto-cicatrisante, sans toutefois excéder 40% molaire dans ladite composition afin de conserver une bonne résistance au soufflage.

La terre rare peut être choisie parmi l'yttrium, le scandium, et les lanthanides par exemple l'ytterbium et l'erbium.

La barrière environnementale peut comprendre en outre une sous-couche interposée entre la surface du substrat et la couche auto-cicatrisante et choisie parmi :
- une sous-couche constituée essentiellement d'au moins un silicate de terre rare RE₂Si₂O₇,
- une sous-couche constituée essentiellement d'au moins un silicate de terre rare RE₂Si₂O₇, déposée sur un revêtement de silicium formé sur le substrat,
- une sous-couche constituée essentiellement de mullite,
- une sous-couche constituée essentiellement de mullite déposée sur un revêtement en silicium formé sur le substrat, et
- une sous-couche ayant essentiellement un gradient de composition silicium-mullite en partant de silicium du côté du substrat pour aboutir à mullite du côté de la couche auto-cicatrisante.

Selon un mode de réalisation, la couche auto-cicatrisante est interposée entre le substrat et une couche externe par exemple en matériau réfractaire ou en matériau abradable.

Selon un deuxième aspect, l'invention a pour objet un procédé pour protéger un substrat, dont au moins une partie adjacente à une surface est en un matériau réfractaire contenant du silicium, lors d'une utilisation à haute température en milieu oxydant, par formation sur la surface du substrat d'une barrière environnementale telle que définie ci-avant.

### Brève description des dessins

L'invention sera mieux comprise à la lecture de la description faite ci-après, à titre indicatif mais non limitatif. Il sera fait référence aux dessins annexés sur lesquels :
- la figure 1 est une vue très schématique d'une pièce en matériau composite contenant du silicium munie d'une barrière environnementale selon un mode de réalisation de l'invention ; et
- les figures 2 à 17 sont des photographies obtenues par microscope électronique à balayage montrant des états de surface de barrières environnementales conformes ou non à l'invention.

### Description détaillée de modes de réalisation

Dans la description détaillée qui suit, on envisage la formation d'une barrière environnementale sur un substrat en matériau CMC contenant du silicium. Il est toutefois rappelé que l'invention est applicable à des substrats en matériau réfractaire monolithique contenant du silicium et, plus généralement, à des substrats dont au moins une partie adjacente à une surface est en un matériau réfractaire (composite ou monolithique) contenant du silicium.

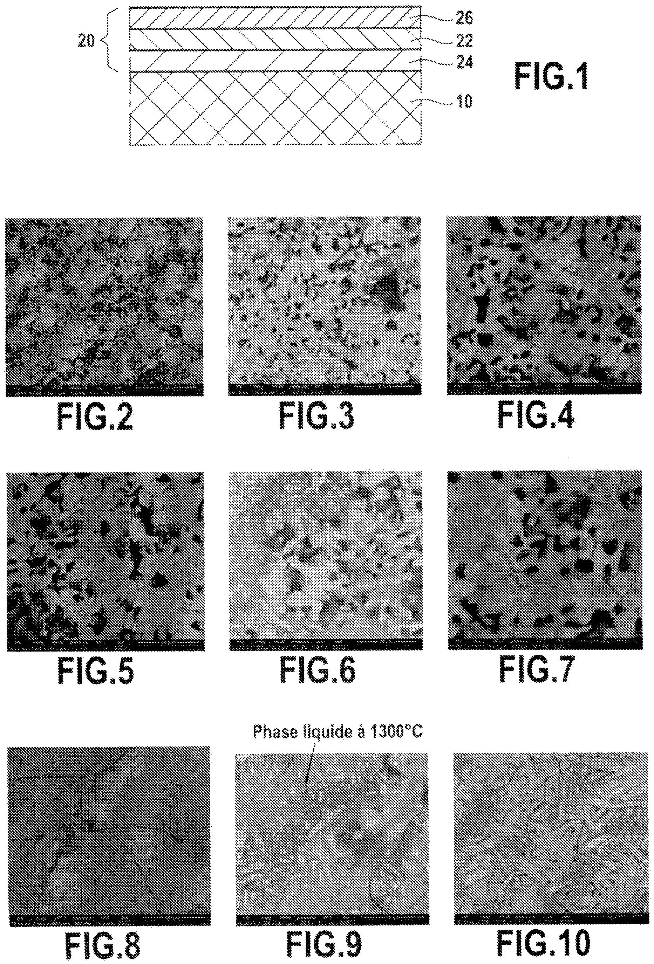

La figure 1 montre très schématiquement un substrat 10 muni d'une barrière environnementale 20 selon un mode de réalisation de l'invention.

Le substrat 10 en matériau CMC contenant du silicium comprend un renfort fibreux qui peut être en fibres de carbone (C) ou en fibres de céramique, par exemple en fibres de SiC ou formées essentiellement de SiC, incluant des fibres en Si-C-O ou Si-C-O-N, c'est-à-dire contenant aussi de l'oxygène et éventuellement de l'azote. De telles fibres sont produites par la société japonaise Nippon Carbon sous la référence « Nicalon » ou « Hi-Nicalon » ou « Hi-Nicalon Type-S », ou par la société japonaise Ube Industries sous la référence « Tyranno-ZMI ». Les fibres de céramique peuvent être revêtues d'une mince couche d'interphase en carbone pyrolytique (PyC), en nitrure de bore (BN) ou en carbone dopé au bore (BC, avec 5% at. à 20% at. de B, le complément étant C).

Le renfort fibreux est densifié par une matrice qui, dans son intégralité ou au moins dans une phase de matrice externe, est constituée par un matériau contenant du silicium, tel qu'un composé du silicium, par exemple SiC, ou un système ternaire Si-B-C, par exemple. Par phase de matrice externe, on entend une phase de matrice formée en dernier, la plus éloignée des fibres du renfort. Dans ce dernier cas, la matrice peut être formée de plusieurs phases de natures différentes par exemple :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

De tels matériaux CMC sont décrits notamment dans les documents US 5 246 736, US 5 965 266, US 6 291 058 et US 6 068 930, les phases de matrice étant formées par infiltration chimique en phase gazeuse, ou CVI ("Chemical Vapor Infiltration").

La matrice peut aussi être au moins en partie formée par introduction de poudres, notamment poudres de carbone et éventuellement de céramique et infiltration par une composition métallique à base de silicium à l'état fondu, pour former une matrice de type SiC-Si. Un tel processus est bien connu et désigné couramment processus MI ("Melt Infiltration").

La barrière environnementale 20 est formée sur toute la surface externe du substrat 10 ou sur une partie seulement de cette surface, par exemple lorsque seulement une partie de la surface doit être protégée. La barrière environnementale 20 comprend une couche auto-cicatrisante 22. Une couche interne ou sous-couche 24 peut être interposée entre le substrat 10 et la couche auto-cicatrisante 22. Une couche externe 26 peut être formée sur la couche auto-cicatrisante.

La couche auto-cicatrisante 22 est essentiellement, c'est-à-dire ici dans une proportion d'au moins 90% molaire, sous forme d'un système constitué de 30% molaire à au plus 80% molaire d'au moins un silicate RE₂Si₂O₇, RE étant une terre rare, et d'au moins 20% molaire à 70% molaire d'oxyde de manganèse MnO. La terre rare est choisie parmi Y, Sc, et des lanthanides, comme par exemple Yb et Er. Outre un tel système, la couche auto-cicatrisante peut comporter de façon minoritaire, c'est-à-dire ici dans une proportion d'au plus 10% molaire, un ou plusieurs oxydes autres que MnO et ayant un point eutectique avec SiO₂ inférieur ou égal à 1595°C, par exemple un ou plusieurs oxydes choisis parmi Al₂O₃, Ga₂O₃, In₂O₃, Nb₂O₅, ZnO, Ta₂O₅. L'ajout de ces autres oxydes a notamment pour fonction de moduler la température d'auto-cicatrisation ou le coefficient de dilatation thermique.

De préférence toutefois, aux inévitables impuretés près, la couche auto-cicatrisante 22 est constituée d'un système RE₂Si₂O₇ - MnO.

Comme cela ressortira des exemples donnés plus loin, la composition de la couche 22 avec présence significative de MnO permet la formation d'une phase liquide ayant une fonction d'auto-cicatrisation dans toute la plage de températures allant d'au plus 1200°C à au moins 1400°C, tout en conservant une phase solide majoritaire. Cela n'exclut pas la présence d'une phase liquide ayant une fonction d'auto-cicatrisation à une température inférieure à 1200°C, par exemple dès 1150°C, et à une température supérieure à 1400°C.

La sous-couche éventuelle 24 peut être essentiellement formée d'au moins un silicate de terre rare RE₂Si₂O₇ et peut être déposée sur un revêtement de silicium formé sur le substrat, la terre rare étant par exemple choisie parmi Y, Sc, et les lanthanides comme par exemple Yb, Dy, Er et La. La terre rare de la sous-couche 24 peut être identique à celle de la couche auto-cicatrisante 22 ou être différente de cette dernière.

La sous-couche 24 peut aussi être essentiellement formée de mullite déposée sur le substrat 10 directement ou avec interposition d'un revêtement de silicium formé sur le substrat pour favoriser l'accrochage de la mullite. On peut aussi former la sous-couche par un revêtement ayant essentiellement un gradient de composition silicium-mullite en partant de silicium du côté du substrat pour aboutir à mullite du côté de la couche auto-cicatrisante 22.

La sous-couche 24 peut comporter de façon minoritaire d'autres constituants, par exemple un ou plusieurs oxydes permettant de moduler le coefficient de dilatation thermique. Ces autres constituants représentent au plus 30% molaire, de préférence au plus 10% molaire de la composition de la sous-couche 24. Il est important que la sous-couche 24 reste stable chimiquement et thermiquement dans les conditions d'utilisation et soit compatible chimiquement et thermo-mécaniquement avec le substrat et la silice. En d'autres termes, il est souhaitable que la sous-couche 24 reste à l'état solide aux températures recherchées d'auto-cicatrisation de la couche auto-cicatrisante 22 pour éviter un contact direct entre le substrat 10 et la couche auto-cicatrisante 22, et ne forme pas une phase liquide avec le substrat et la silice contenue dans la couche auto-cicatrisante 22 ou provenant d'une oxydation du silicium du substrat 10. Il est souhaitable aussi que le coefficient de dilatation thermique de la sous-couche 24 soit relativement proche de ceux du substrat 10 et de la couche auto-cicatrisante 22.

La sous-couche 24 peut, mais non nécessairement, comprendre un même silicate de terre rare RE₂Si₂O₇ que celui entrant dans la composition de la couche auto-cicatrisante.

La couche externe éventuelle 26 peut être en un matériau réfractaire par exemple dans le cas de pièces en CMC nécessitant un traitement de surface telles que des aubes de turbine devant présenter un caractère lisse en surface. La couche externe peut alors être formée par de la mullite, un silicate, par exemple un silicate d'aluminium ou encore un oxyde réfractaire. Le caractère lisse en surface peut être obtenu par usinage ou polissage. En variante, pour de telles applications, la couche auto-cicatrisante 22 peut constituer la couche externe de la barrière environnementale, un usinage ou polissage de surface éventuel étant alors réalisé sur la couche auto-cicatrisante 22.

La couche externe éventuelle 26 peut aussi être en un matériau abradable, par exemple dans le cas de pièces en CMC formant des anneaux de turbine. Un tel matériau abradable peut être constitué par une céramique poreuse, de façon bien connue en soi, pour permettre à des léchettes en sommets d'aubes mobiles de pénétrer sans dommage dans le matériau abradable et réduire le jeu entre sommets d'aubes et anneau de turbine.

La sous-couche 24 peut être formée sur le substrat 10 par projection plasma à partir de poudres solides RE₂O₃ et SiO₂ et/ou de poudres de composé RE₂Si₂O₇, et éventuellement de poudres d'autres constituants minoritaires.

De façon similaire, la couche auto-cicatrisante 22 peut être formée sur la sous-couche 24 par projection plasma à partir de poudres solides RE₂O₃, SiO₂, ou RE₂Si₂O₇, et MnO et éventuellement de poudres d'autres oxydes minoritaires comme indiqué plus haut, les quantités respectives de poudres projetées étant choisies en fonction de la composition finale désirée.

La couche externe 26 peut aussi être formée sur le substrat 10 par projection plasma à partir de poudre(s) de céramique.

D'autres procédés sont envisageables pour la formation de la sous-couche 24, la couche auto-cicatrisante 22 et la couche externe 26, par exemple l'amenée de particules sous forme sol-gel, l'application de poudres sous forme d'une barbotine, un dépôt par électrophorèse, un dépôt physique en phase gazeuse ou PVD ("Physical Vapor Deposition") ou un dépôt chimique en phase gazeuse CVD ("Chemical Vapor Deposition"). On peut aussi réaliser un frittage « flash » de poudres préalablement déposées ou processus SPS (« Spark Plasma Sintering »).

L'épaisseur de la sous-couche éventuelle 24 est choisie relativement faible, par exemple comprise entre 10 microns et 300 microns. L'épaisseur de la couche auto-cicatrisante 22 peut également être choisie relativement faible, par exemple comprise entre 10 microns et 300 microns. L'épaisseur de la couche externe éventuelle 26 est choisie en fonction des besoins et pourra être comprise entre 500 microns et 1500 microns. L'épaisseur des couches pourra dépendre aussi de la capacité du processus de dépôt utilisé à former des couches minces homogènes d'épaisseur sensiblement uniforme. Ainsi, par exemple, pour de faibles épaisseurs, on pourra préférer utiliser un processus de dépôt de type PVD ou CVD.

La présence d'une couche auto-cicatrisante permet d'avoir une barrière environnementale efficace, étanche et persistante aux températures d'auto-cicatrisation. En cas de retour à une température inférieure à la température d'auto-cicatrisation, une cristallisation de la phase liquide se produit et l'étanchéité reste assurée par un revêtement se présentant sous forme d'une juxtaposition de grains. En cas d'apparition de fissures, une élévation de la température jusqu'à la température d'auto-cicatrisation suffit pour colmater celles-ci.

### Exemple 1

Afin d'évaluer le potentiel d'auto-cicatrisation de différentes compositions à différentes températures, des pastilles ont été élaborées formées chacune d'une sous-couche de silicate d'yttrium Y₂Si₂O₇ surmontée d'une couche formée à partir d'un mélange de poudres de Y₂Si₂O₇ et de MnO. Les deux couches ont été réalisées par frittage flash des poudres et présentaient une épaisseur de 1mm environ. Les pastilles ont été traitées thermiquement pendant 50 heures sous air puis trempées sous air avant d'être observées au microscope électronique à balayage (MEB).

Pour une température de traitement thermique de 1200°C, la formation d'une phase liquide en quantité voulue pour assurer une fonction d'auto-cicatrisation a été observée si le pourcentage molaire de MnO dans le mélange Y₂Si₂O₇ - MnO est d'au moins 20%, ce pourcentage étant de préférence compris entre 20% molaire et 70% molaire pour avoir, dès 1200°C au plus jusque 1400°C, une phase liquide nappante, tout en étant stable en surface, c'est-à-dire avec présence d'une phase solide suffisante pour assurer une bonne résistance au soufflage.

Une phase liquide apparait dès 1150°C pour une proportion molaire de MnO comprise entre 30% et 50% dans le système Y₂Si₂O₇ - MnO.

Les figures 2 à 17 sont des photographies prises au MEB pour différentes compositions du mélange Y₂Si₂O₇ - MnO et différentes températures de traitement thermique selon le tableau ci-après, avec mention de la présence ou non d'une phase liquide assurant la fonction d'auto-cicatrisation (phase A-C):

| Figure | %mol MnO dans Y₂Si₂O₇ - MnO | Température (°C) | Phase A-C |
|---|---|---|---|
| 2 | 10 | 1200 | non |
| 3 | 10 | 1300 | non |
| 4 | 10 | 1400 | oui |
| 5 | 20 | 1200 | oui |
| 6 | 20 | 1300 | oui |
| 7 | 20 | 1400 | oui |
| 8 | 40 | 1200 | oui |
| 9 | 40 | 1300 | oui |
| 10 | 40 | 1400 | oui |
| 11 | 64 | 1200 | oui |
| 12 | 64 | 1300 | oui |
| 13 | 64 | 1400 | oui |
| 14 | 85 | 1200 | oui |
| 15 | 85 | 1300 | Phase liquide excessive |
| 16 | 30 | 1150 | oui |
| 17 | 40 | 1150 | oui |

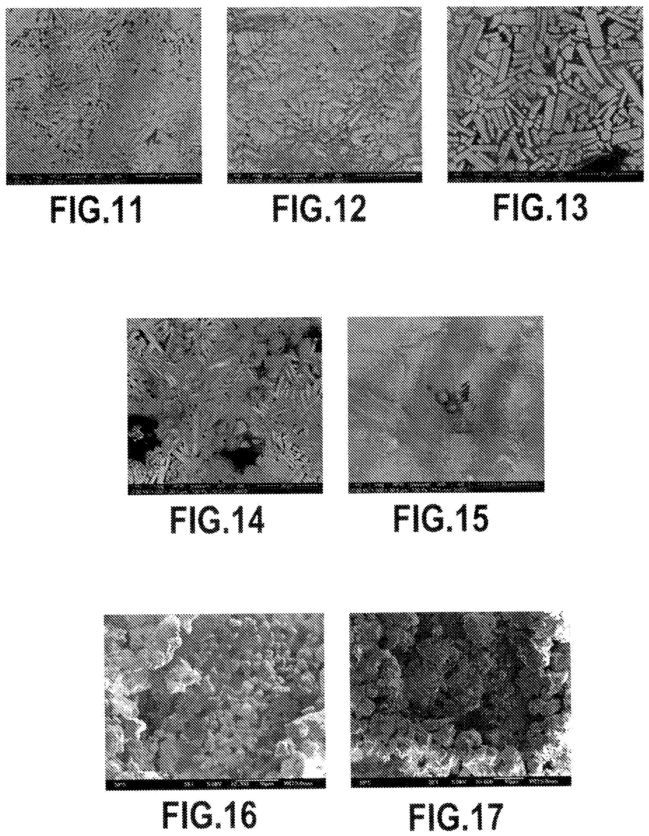

Sur les figures 5 à 17, la présence d'une phase liquide aux joints des grains est décelable comme indiqué sur la figure 9, par exemple. Dans le cas de la figure 15, cette phase liquide est excessive, c'est-à-dire susceptible de provoquer la dissolution du matériau dans la phase liquide, et par suite, une élimination du matériau par soufflage.

### Exemple 2

Il a été procédé comme dans l'exemple 1 mais en remplaçant MnO par de l'oxyde de gallium Ga₂O₃ avec des proportions molaires de Ga₂O₃ dans le mélange Y₂Si₂O₇ - Ga₂O₃ égales à 5%, 10%, 25% et 53% et des températures de traitement thermique de 1300°C, 1350°C et 1400°C. Il n'a pas été constaté de présence de phase liquide capable d'assurer la fonction d'auto-cicatrisation.

### Exemple 3

Il a été procédé comme dans l'exemple 1 mais en remplaçant MnO par de l'oxyde de niobium Nb₂O₅ avec des proportions molaires de Nb₂O₅ dans le mélange Y₂Si₂O₇ - Nb₂O₅ égales à 5%, 10%, 25% , 48%, 60% et 85% et des températures de traitement thermique de 1300°C, 1350°C et 1400°C. Il n'a pas été constaté de présence de phase liquide capable d'assurer la fonction d'auto-cicatrisation.

### Exemple 4

Il a été procédé comme dans l'exemple 1 mais en remplaçant MnO par de l'oxyde de zinc ZnO avec des proportions molaires de ZnO dans le mélange Y₂Si₂O₇ - ZnO égales à 5%, 10%, 15% ,50%, 60% et 85% et des températures de traitement thermique de 1200°C, 1300°C, 1350°C et 1400°C. Il n'a pas été constaté de présence de phase liquide capable d'assurer la fonction d'auto-cicatrisation.

Les exemples 2 à 4 montrent que la substitution à MnO d'oxydes Ga₂O₃, Nb₂O₅ ou ZnO ayant aussi la capacité d'abaisser le point de fusion dans un mélange avec Y₂Si₂O₇ est inopérante pour obtenir une couche auto-cicatrisante telle que désirée.

## Revendications

1. Pièce comprenant un substrat, dont au moins une partie adjacente à une surface du substrat est en un matériau réfractaire contenant du silicium, et une barrière environnementale formée sur la surface du substrat et ayant au moins une couche auto-cicatrisante contenant un silicate de terre rare,
**caractérisée en ce que** la couche auto-cicatrisante est formée:
- pour au moins 90% molaire, d'un système constitué de 30% molaire à au plus 80% molaire d'au moins un silicate de terre rare RE₂Si₂O₇, RE étant une terre rare, et d'au moins 20% molaire à 70% molaire d'oxyde de manganèse MnO, et
- pour au plus 10% molaire d'un ou plusieurs oxydes à l'exception de MnO, ayant un point eutectique avec SiO₂ inférieur ou égal à 1595°C,
- la couche auto-cicatrisante présentant une phase liquide ayant une fonction d'auto-cicatrisation dans au moins toute la plage de températures allant de 1200°C à 1400°C, tout en conservant une phase solide majoritaire.

2. Pièce selon la revendication 1, **caractérisée en ce que** RE est choisie parmi l'yttrium, le scandium, et les lanthanides, notamment l'ytterbium et l'erbium.

3. Pièce selon la revendication 1 ou la revendication 2, **caractérisée en ce que** la barrière environnementale comprend en outre une sous-couche interposée entre la surface du substrat et la couche auto-cicatrisante et choisie parmi :
- une sous-couche constituée essentiellement d'au moins un silicate de terre rare RE₂Si₂O₇,
- une sous-couche constituée d'au moins un silicate de terre rare RE₂Si₂O₇ déposée sur un revêtement de silicium formé sur le substrat,
- une sous-couche constituée essentiellement de mullite,
- une sous-couche constituée essentiellement de mullite déposée sur un revêtement en silicium formé sur le substrat, et
- une sous-couche ayant essentiellement un gradient de composition silicium-mullite en partant de silicium du côté du substrat pour aboutir à mullite du côté de la couche auto-cicatrisante.

4. Pièce selon l'une quelconque des revendications 1 à 3, **caractérisée en ce que** la couche auto-cicatrisante est interposée entre le substrat et une couche externe en matériau réfractaire.

5. Pièce selon l'une quelconque des revendications 1 à 3, **caractérisée en ce que** la couche auto-cicatrisante est interposée entre le substrat et une couche externe en matériau abradable.

6. Procédé pour protéger un substrat, dont au moins une partie adjacente à une surface est en un matériau réfractaire contenant du silicium, lors d'une utilisation à haute température en milieu oxydant, par formation sur la surface du substrat d'une barrière environnementale ayant au moins une couche auto-cicatrisante contenant un silicate de terre rare,
**caractérisé en ce que** la couche auto-cicatrisante est formée:
- pour au moins 90% molaire, d'un système constitué de 30% molaire à au plus 80% molaire d'au moins un silicate de terre rare RE₂Si₂O₇, RE étant une terre rare, et d'au moins 20% molaire à 70% molaire d'oxyde de manganèse MnO, et
- pour au plus 10% molaire d'un ou plusieurs oxydes à l'exception de MnO, ayant un point eutectique avec SiO₂ inférieur ou égal à 1595°C,
- pour obtenir une couche auto-cicatrisante présentant une phase liquide ayant une fonction d'auto-cicatrisation dans au moins toute la plage de températures allant de 1200°C à 1400°C, tout en conservant une phase solide majoritaire.

7. Procédé selon la revendication 6, **caractérisée en ce que** RE est choisie parmi l'yttrium, le scandium, et les lanthanides, notamment l'ytterbium et l'erbium.

8. Procédé selon la revendication 6 ou la revendication 7, **caractérisé en ce que** l'on forme une barrière environnementale ayant en outre une sous-couche interposée entre la surface du substrat et la couche auto-cicatrisante et choisie parmi:
- une sous-couche constituée essentiellement d'au moins un silicate de terre rare RE₂Si₂O₇,
- une sous-couche constituée d'au moins un silicate de terre rare RE₂Si₂O₇ déposée sur un revêtement de silicium formé sur le substrat,
- une sous-couche constituée essentiellement de mullite,
- une sous-couche constituée essentiellement de mullite déposée sur un revêtement en silicium formé sur le substrat, et
- une sous-couche ayant essentiellement un gradient de composition silicium-mullite en partant de silicium du côté du substrat pour aboutir à mullite du côté de la couche auto-cicatrisante.

9. Procédé selon l'une quelconque des revendications 6 à 8, **caractérisé en ce qu'**une couche externe en un matériau réfractaire est formée sur la couche auto-cicatrisante.

10. Procédé selon l'une quelconque des revendications 6 à 8, **caractérisé en ce qu'**une couche externe en matériau abradable est formée sur la couche auto-cicatrisante.

## Patentansprüche

1. Teil, umfassend ein Substrat, von dem wenigstens ein zu einer Oberfläche des Substrats benachbarter Teil aus einem siliziumhaltigen feuerfesten Werkstoff besteht, und eine Umgebungsbarriere, die auf der Oberfläche des Substrats ausgebildet ist und wenigstens eine selbstheilende Schicht, die ein Seltenerdsilikat enthält, aufweist,
**dadurch gekennzeichnet, dass** die selbstheilende Schicht gebildet ist:
- zu wenigstens 90 Mol-% von einem System, das aus 30 Mol-% bis höchstens 80 Mol-% wenigstens eines Seltenerdsilikats RE₂Si₂O₇, wobei RE eine Seltene Erde ist, und aus wenigstens 20 Mol-% bis 70 Mol-% Manganoxid MnO besteht, und
- zu höchstens 10 Mol-% von einem oder mehreren Oxiden mit Ausnahme von MnO, mit einem eutektischen Punkt mit SiO₂ kleiner oder gleich 1595 °C,
- wobei die selbstheilende Schicht eine flüssige Phase mit einer Selbstheilungsfunktion in wenigstens dem gesamten Temperaturbereich von 1200 °C bis 1400 °C, unter gleichzeitiger Bewahrung einer überwiegenden festen Phase aufweist.

2. Teil nach Anspruch 1, **dadurch gekennzeichnet, dass** RE aus Yttrium, Scandium und Lanthanoiden, insbesondere Ytterbium und Erbium ausgewählt ist.

3. Teil nach Anspruch 1 oder Anspruch 2, **dadurch gekennzeichnet, dass** die Umgebungsbarriere ferner eine Unterschicht umfasst, die zwischen der Oberfläche des Substrats und der selbstheilenden Schicht eingefügt und ausgewählt ist aus:
- einer Unterschicht, die im Wesentlichen aus wenigstens einem Seltenerdsilikat RE₂Si₂O₇ besteht,
- einer aus wenigstens einem Seltenerdsilikat RE₂Si₂O₇ bestehenden Unterschicht, die auf einer auf dem Substrat gebildeten Siliziumbeschichtung abgeschieden ist,
- einer im Wesentlichen aus Mullit bestehenden Unterschicht,
- einer im Wesentlichen aus Mullit bestehenden Unterschicht, die auf einer auf dem Substrat gebildeten Siliziumbeschichtung abgeschieden ist, und
- einer Unterschicht mit im Wesentlichen einem Silizium-Mullit-Zusammensetzungsgradienten, ausgehend von Silizium auf der Seite des Substrats bis hin zu Mullit auf der Seite der selbstheilenden Schicht.

4. Teil nach einem der Ansprüche 1 bis 3, **dadurch gekennzeichnet, dass** die selbstheilende Schicht zwischen dem Substrat und einer äußeren Schicht aus feuerfestem Werkstoff eingefügt ist.

5. Teil nach einem der Ansprüche 1 bis 3, **dadurch gekennzeichnet, dass** die selbstheilende Schicht zwischen dem Substrat und einer äußeren Schicht aus Abriebmaterial eingefügt ist.

6. Verfahren zum Schützen eines Substrats, von dem wenigstens ein zu einer Oberfläche benachbarter Teil aus einem siliziumhaltigen feuerfesten Werkstoff besteht, während einer Verwendung bei hoher Temperatur in oxidierender Umgebung, durch Ausbilden einer Umgebungsbarriere, die wenigstens eine ein Seltenerdsilikat enthaltende selbstheilende Schicht aufweist, auf der Oberfläche des Substrats,
**dadurch gekennzeichnet, dass** die selbstheilende Schicht gebildet ist:
- zu wenigstens 90 Mol-% von einem System, das aus 30 Mol-% bis höchstens 80 Mol-% wenigstens eines Seltenerdsilikats RE₂Si₂O₇, wobei RE eine Seltene Erde ist, und aus wenigstens 20 Mol-% bis 70 Mol-% Manganoxid MnO besteht, und
- zu höchstens 10 Mol-% von einem oder mehreren Oxiden mit Ausnahme von MnO, mit einem eutektischen Punkt mit SiO₂ kleiner oder gleich 1595 °C,
- um eine selbstheilende Schicht zu erhalten, die eine flüssige Phase mit einer Selbstheilungsfunktion in wenigstens dem gesamten Temperaturbereich von 1200 °C bis 1400 °C, unter gleichzeitiger Bewahrung einer überwiegenden festen Phase aufweist.

7. Verfahren nach Anspruch 6, **dadurch gekennzeichnet, dass** RE aus Yttrium, Scandium und Lanthanoiden, insbesondere Ytterbium und Erbium ausgewählt ist.

8. Verfahren nach Anspruch 6 oder Anspruch 7, **dadurch gekennzeichnet, dass** eine Umgebungsbarriere ausgebildet wird, die ferner eine Unterschicht aufweist, welche zwischen der Oberfläche des Substrats und der selbstheilenden Schicht eingefügt und ausgewählt ist aus:
- einer Unterschicht, die im Wesentlichen aus wenigstens einem Seltenerdsilikat RE₂Si₂O₇ besteht,
- einer aus wenigstens einem Seltenerdsilikat RE₂Si₂O₇ bestehenden Unterschicht, die auf einer auf dem Substrat gebildeten Siliziumbeschichtung abgeschieden ist,
- einer im Wesentlichen aus Mullit bestehenden Unterschicht,
- einer im Wesentlichen aus Mullit bestehenden Unterschicht, die auf einer auf dem Substrat gebildeten Siliziumbeschichtung abgeschieden ist, und
- einer Unterschicht mit im Wesentlichen einem Silizium-Mullit-Zusammensetzungsgradienten, ausgehend von Silizium auf der Seite des Substrats bis hin zu Mullit auf der Seite der selbstheilenden Schicht.

9. Verfahren nach einem der Ansprüche 6 bis 8, **dadurch gekennzeichnet, dass** eine äußere Schicht aus einem feuerfesten Werkstoff auf der selbstheilenden Schicht ausgebildet ist.

10. Verfahren nach einem der Ansprüche 6 bis 8, **dadurch gekennzeichnet, dass** eine äußere Schicht aus Abriebmaterial auf der selbstheilenden Schicht ausgebildet ist.

## Claims

1. A part comprising a substrate in which at least a portion adjacent to a surface of the substrate is made of a refractory material containing silicon, and an environmental barrier formed on the surface of the substrate and having at least a self-healing layer containing a rare earth silicate, the part being **characterized in that** the self-healing layer is formed:
• for at least 90 mol%, by a system constituted by 30 mol% to at most 80 mol% of at least one rare earth silicate RE₂Si₂O₇, RE being a rare earth, and at least 20 mol% to 70 mol% of manganese oxide MnO; and
• for at most 10 mol%, by one or more oxides other than MnO, having a eutectic point with SiO₂ less than or equal to 1595°C;
the self-healing layer presenting a liquid phase having a self-healing function at least throughout the temperature range 1200°C to 1400°C, while conserving a majority solid phase.

2. A part according to claim 1, **characterized in that** RE is selected from yttrium, scandium, and the lanthanides, in particular ytterbium and erbium.

3. A part according to claim 1 or claim 2, **characterized in that** the environmental barrier further comprises an underlayer interposed between the surface of the substrate and the self-healing layer, and selected from:
• an underlayer essentially constituted by at least one rare earth silicate RE₂Si₂O₇;
• an underlayer constituted by at least one rare earth silicate RE₂Si₂O₇ deposited on a silicon coating formed on the substrate;
• an underlayer essentially constituted by mullite;
• an underlayer essentially constituted by mullite deposited on a silicon coating formed on the substrate; and
• an underlayer essentially having a silicon-mullite composition gradient starting from silicon beside the substrate and ending with mullite beside the self-healing layer.

4. A part according to any one of claims 1 to 3, **characterized in that** the self-healing layer is interposed between the substrate and an external layer of refractory material.

5. A part according to any one of claims 1 to 3, **characterized in that** the self-healing layer is interposed between the substrate and an external layer of abradable material.

6. A method of providing a substrate in which at least a portion adjacent to a surface is made of a refractory material containing silicon, with protection while the substrate is in use at high temperature in an oxidizing medium, by forming an environmental barrier on the surface of the substrate, the barrier having at least a self-healing layer containing a rare earth silicate, and the method being **characterized in that** the self-healing layer is formed:
• for at least 90 mol%, by a system constituted by 30 mol% to at most 80 mol% of at least one rare earth silicate RE₂Si₂O₇, RE being a rare earth, and at least 20 mol% to 70 mol% of manganese oxide MnO; and
• for at most 10 mol%, by one or more oxides other than MnO, having a eutectic point with SiO₂ less than or equal to 1595°C;
so as to obtain a self-healing layer presenting a liquid phase having a self-healing function at least throughout the temperature range 1200°C to 1400°C, while conserving a majority solid phase.

7. A method according to claim 6, **characterized in that** RE is selected from yttrium, scandium, and the lanthanides, in particular ytterbium and erbium.

8. A method according to claim 6 or claim 7, **characterized in that** an environmental barrier is formed also having a sublayer interposed between the surface of the substrate and the self-healing layer, the sublayer being selected from:
• an underlayer essentially constituted by at least one rare earth silicate RE₂Si₂O₇;
• an underlayer constituted by at least one rare earth silicate RE₂Si₂O₇ deposited on a silicon coating formed on the substrate;
• an underlayer essentially constituted by mullite;
• an underlayer essentially constituted by mullite deposited on a silicon coating formed on the substrate; and
• an underlayer essentially having a silicon-mullite composition gradient starting from silicon beside the substrate and ending with mullite beside the self-healing layer.

9. A method according to any one of claims 6 to 8, **characterized in that** an external layer of refractory material is formed on the self-healing layer.

10. A method according to any one of claims 6 to 8, **characterized in that** an external layer of abradable material is formed on the self-healing layer.
